Europäisches Patentamt

European Patent Office    (11) Numéro de publication: **0 258 146**

Office européen des brevets    **A1**

(19)

(12)    # DEMANDE DE BREVET EUROPEEN

(21) Numéro de dépôt: **87401925.0**

(22) Date de dépôt: **24.08.87**

(51) Int. Cl.⁴: **C 22 B 58/00**
**C 01 G 15/00**

(30) Priorité: **22.08.86 FR 8612002**

(43) Date de publication de la demande:
**02.03.88 Bulletin 88/09**

(84) Etats contractants désignés:
**AT BE CH DE ES FR GB GR IT LI LU NL SE**

(71) Demandeur: **SOCIETE MINIERE ET METALLURGIQUE
DE PENARROYA Société anonyme dite:
Tour Maine-Montparnasse 33, avenue du Maine
F-75755 Paris Cédex 15 (FR)**

(72) Inventeur: **Decerle, Annie
23, rue Champ-Lagarde
F-78000 Versailles (FR)**

**Masson, Hervé
39, rue des Sablons
F-78750 Mareil-Marly (FR)**

(74) Mandataire: **Ricalens, François
MINEMET RECHERCHE B.P. 106 1, avenue Albert
Einstein
F-78191 Trappes Cedex (FR)**

(54) Procédé de récupération du gallium contenu dans une solution d'aluminate de sodium.

(57) L'invention a pour objet un procédé de récupération du gallium contenu dans une solution d'aluminate de sodium.

Ce procédé consiste en un échange d'espèces chimiques entre une phase stationnaire chargée en alcoyl-7-hydroxy-8-quinoléine et la phase aqueuse d'aluminate de sodium et est caractérisé par le fait que la teneur en alcoyl-7-hydroxy-8-quinoleine est supérieure à 100 grammes par litre de support.

Application à l'industrie de l'alumine.

EP 0 258 146 A1

**Description**

PROCÉDÉ DE RÉCUPERATION DU GALLIUM CONTENU DANS UNE SOLUTION D'ALUMINATE DE SODIUM

La présente invention a pour objet un procédé amélioré de récupération du gallium contenu dans les solutions d'aluminate de sodium. Elle a plus particulièrement pour objet un procédé d'échange d'espèces chimiques entre une phase stationnaire et la phase aqueuse, constituée par la solution d'aluminate de sodium.

Pendant longtemps le gallium a été une curiosité des laboratoires et on utilise essentiellement ses propriétés de fondre à basse température (29°C) pour faire des alliages à bas point de fusion. Plus récemment, on a trouvé de nouvelles applications telles que GGG (Grenat-Gadolinium-Gallium).

Enfin l'arseniure de gallium se développe largement pour certaines utilisations dans les semi-conducteurs. Les principales sources de gallium sont les solutions d'aluminate de sodium et en particulier les solutions dites "liqueurs BAYER", issues du procédé BAYER pour la fabrication de l'alumine à partir de la bauxite.

Cependant, malgré sa teneur relativement élevée (entre 200 et 600 ppm), il est relativement difficile de récupérer le gallium en présence de grandes quantités d'aluminium, qui a des propriétés chimiques voisines de celles du gallium.

De très nombreux procédés ont été proposés, mais aucun n'a apporté de moyens vraiment satisfaisants sur le plan économique.

Pendant longtemps l'électrolyse sur cathode de mercure a permis de fabriquer les faibles quantités nécessaires à la consommation mondiale. Toutefois ce procédé, bien qu'ayant donné certaines satisfactions, mettait en oeuvre des quantités importantes de mercure dont la manipulation est considérée comme dangereuse.

C'est pourquoi, on s'est orienté de plus en plus vers des procédés d'extraction liquide/liquide. De nombreux extractants ont été proposés parmi lesquels les dé rivés de l'hydroxy-8-quinoléine, appelée souvent oxine.

Un procédé d'extraction à partir de l'oxine avait déjà été proposé par la société ALAIS, FROGES et CAMARGUE pour récupérer le gallium à partir des solutions d'aluminate de sodium.

Toutefois, le procédé, quelqu'intéressant qu'il fût, était difficile à mettre en oeuvre, car l'oxine et son complexe avec le gallium n'étaient solubles que dans des solvants chlorés, dont la mise en oeuvre est souvent délicate.

Une amélioration sensible a été réalisée lors de l'apparition sur le marché des hydroxy-8-quinoléines substituées en 7. On peut ainsi faire référence au brevet déposé en Australie par la Société ASHLAND OIL et publié sous le numéro 448131. Cette augmentation du caractère lipophile apportait un progrès technique important, car il rendait possible l'utilisation de solvants non chlorés du type fraction pétrolière aromatique ou non.

Dans divers brevets de perfectionnement, la Société RHONE POULENC, reprenant les enseignements de la Société ASHLAND OIL et la Société ALAIS, FROGE et CAMARGUE, développait des techniques pour améliorer la cinétique de l'extraction liquide/liquide, notamment en formant des micro-émulsions. On peut citer notamment les demandes de brevets européens publiées sous les numéros 0102280 et 0102882.

Par ailleurs, une société japonaise, la société SUMITOMO CHEMICAL, a proposé l'extraction par résine échangeuse d'ions au moyen de résines présentant comme groupement actif la fonction amide-oxime. Bien qu'en principe ce procédé soit plus séduisant que celui des extractions liquide/liquide utilisant les dérivés hydroxy-8-quinoléine, ce procédé est extrêmement difficile à mettre en oeuvre, car ces groupements, s'ils sont faciles à synthétiser, sont souvent fragiles et la dégradation de la résine lors des cycles élution-fixation acide est souvent supérieure à 5 % par cycle, ce qui a conduit les promoteurs de ce procédé à proposer dans un premier temps des élutions à basse température et dans un second temps des élutions basiques relativement compliquées.

Plus récemment, la Société MITSUBISHI CHEM. IND. dans son brevet japonais publié sous le numéro 60-42234/85, a proposé d'imprégner des résines avec des composés d'alcoyl-7-hydroxy-8-quinoléine et a démontré qu'il était possible de fixer de petites quantités de gallium sur ces résines, puis d'éluer le gallium avec les acides minéraux classiques.

Toutefois ce brevet reste silencieux sur les capacités à attendre de ces résines, sur les charges que l'on pouvait espérer, sur les composés préférés pour ce genre d'imprégnation et préconise des taux d'imprégnation relativement faibles.

La charge totale que l'on peut atteindre à partir d'une solution BAYER donnée est essentielle pour déterminer si un procédé est rentable ou non. Les études, qui ont mené à la présente invention, ont démontré que la capacitédes résines dépendait du composé choisi et surtout énormément de la concentration en produit imprégné.

C'est pourquoi un des buts de la présente invention est de trouver une résine susceptible de fixer au moins un gramme de gallium par litre de résine dans des conditions opératoires compatibles avec le procédé BAYER.

Un autre but de la présente invention est de fournir une résine imprégnée qui soit facile à éluer.

Ces buts, et d'autres qui apparaîtront par la suite, sont atteints au moyen du procédé de récupération du gallium contenu dans une solution d'aluminate de sodium par échange d'espèces chimiques entre une phase stationnaire chargée en alcoyl-7-hydroxy-8-quinoléine et la phase aqueuse d'aluminate de sodium, caractérisé par le fait que la teneur en alcoyl-7-hydroxy-8-quinoléine est de 100 grammes par litre de support sec avant imprégnation, de préférence entre 250 et 350 grammes par litre.

La phase stationnaire se compose, ainsi qu'il vient d'être indiqué, en une phase solide support chargée en alcoyl-7-hydroxy-8-quinoléine ou d'un mélange de diver ses alcoyl-7-hydroxy-8-quinoléines, le groupement alcoyl comportant en général de 8 à 16 atomes de carbone.

Ladite phase solide support peut soit préexister, soit être formée au cours de l'opération de charge. Dans le premier cas, la phase support peut être toute phase ayant une forte surface spécifique et une forte porosité.

Comme exemple de phase solide support on peut choisir soit des supports minéraux soit des supports organiques, ces derniers étant les supports préférés. Parmi les supports organiques on peut citer les charbons actifs et leurs équivalents, et les résines inertes prévues pour l'imprégnation telles que par exemple celles vendues par la société ROHM AND HAAS sous la dénomination commerciale générique XAD.

Parmi les différents supports, les préférés sont ceux qui répondent aux caractéristiques suivantes :
surface spécifique : supérieure à 100 m2/g
porosité : supérieure à 30%
diamètre moyen des pores : supérieur à 50 Å

En outre les supports polymèriques synthétiques, tels que les résines prévues pour l'imprégnation, sont préférés au charbon actif et parmi les résines prévues pour l'imprégnation, celles présentant un squelette non aromatique tel que les squelettes aliphatiques (par exemple XAD 7) sont préférables, toute chose égale par ailleurs.

Ainsi que cela a été mentionné ci-dessus, lorsque la résine est une résine du type XAD 7, la teneur en alcoyl-7-hydroxy-8-quinoléine à imprégner est de 250 à 350 grammes par litre de support sec initial. De préférence, la teneur en alcoyl-7-hydroxy-8-quinoléine est choisie de 290 à 320 grammes par litre de support. L'évaluation de la densité apparente d'un litre de support du type de celui vendu sous la dénomination commerciale XAD 7 est difficile à évaluer car les producteurs ne la donnent que d'une manière très indirecte. La valeur calculée à partir des données du producteur et de mesures réalisées au cours de la présente étude est comprise entre 0,30 et 0,35.

Lorsque l'on utilise d'autres supports que celui connu sous le nom de XAD 7, il est préférable de convertir cettè condition relative à la teneur en matière(s) active(s) et de l'exprimer en quantité de produits actifs imprégnés en mole par mètre carré de surface du support. Ainsi, compte tenu de l'indétermination sur la densité apparente sèche, le domaine impératif devient supérieur à $2.10^{-6}$ mole/m2, les domaines préférés deviennent compris entre environ $5.10^{-6}$ mole/m2 et $9.10^{-6}$ mole/m2, c'est-à-dire, exprimée en masse lorsque le produit actif est un des produits vendu sous la dénomination commerciale de KE-LEX 100 ou LIX 26, entre $1,5.10^{-3}$ g/m2 et $2,8.10^{-3}$ g/m2 et de préférence comprise entre $6.10^{-6}$ mole/m2 et $8.10^{-6}$ mole/m2.

Lorsque la condition est exprimée en quantité de matière active par unité de surface, il convient de vérifier que la matière active ne remplisse pas la totalité du volume des pores après expansion de la résine, de préférence ne remplisse qu'au plus les trois quarts de ce volume, avantageusement les deux tiers. En théorie, ce volume est aisé à calculer avant l'expansion, ou gonflement, car les données nécessaires sont en général indiquées dans la fiche technique du fabricant. On peut également avoir une valeur approximative en considérant que la quantité d'eau contenue dans la résine humide après avoir été égouttée est égale à ce volume.

Pour la détermination du volume des pores après gonflement, on peut en première approximation considérer que seul le volume des pores augmente.

Lorsqu'il n'est pas possible de remplir la condition relative à la quantité de matière par unité de surface simultanément avec celle qui vient d'être exposée, s'il s'agit de la zone préférée on peut par des tests de routine déterminer la zone de pic, s'il s'agit de la zone impérative, le support peut être considéré comme n'étant pas satisfaisant pour la mise en oeuvre de la présente invention.

Les études, qui ont mené à la présente invention, ont démontré que les différents substituants en position 7 n'étaient pas indifférents. Pour cette application le meilleur produit serait celui qui est vendu sous la marque déposée LIX 26.

Il·convient d'indiquer que, au cours de l'imprégnation et au cours de la première mise en eau, le volume de la résine XAD 7 croît d'environ 35 % au total.

Ainsi qu'on le verra dans l'exemple 1, l'on a pu démontrer que la zone optimale pour charger la résine était située entre 250 et 350 grammes par litre, si l'on se place au dehors de cette zone optimale, la capacité baisse, non seulement en valeur absolue, mais aussi ramenée à la quantité de produits actifs.

Dans le cas où la phase solide support est formée au cours de l'opération de charge, les contraintes sur la quantité de produits actifs par litre de résine sont moins importantes, par exemple supérieure à 100 g/l. C'est la technique utilisée par la Société BAYER pour synthétiser les résines dites "encagées", qui sont vendues sous la dénomination commerciale générale de Lewatit OC. Dans cette technique de synthèse, qui est décrite dans des brevets déposés dans de nombreux pays par la Société BAYER, la polymérisation a lieu autour des gouttes de réactifs, de sorte qu'ils sont mieux fixés que dans les résines imprégnées.

De manière surprenante, on a pu montrer que dans ce cas spécifique pour des résines expérimentales fournies sur la demande des sociétés demanderesses pa la Société BAYER, la fixation était meilleure que dans le cas des simples imprégnations.

Il a été montré qu'il était intéressant lors de la synthèse de co-imprégner en proportion assez élevée (de 10 à 100 % en masse du produit actif) un composé faiblement soluble en phase aqueuse, notamment dans des phases acides ou de préférence basiques. Comme exemple de tels composés, on peut citer des acides organiques, des alcools à chaîne relativement faible (inférieures à 13 atomes de carbone), voire des bases organiques.

Ces acides et ces bases ont de préférence des chaînes dont le total des carbones est inférieur à 15. Lorsque les acides organiques sont des acides à forte polarité tels que, par exemple, des acides phosphorés, tels que les mono- et di-esters des acides phosphoriques (ortho ou pyro), les acides phosphoniques et leurs esters, les acides phosphiniques et leurs esters, la limite supérieure en carbone peut atteindre 18.

Lorsque ces résines sont mises en contact avec des phases aqueuses lors des premiers cycles de récupération du gallium, ces produits hydrosolubles s'échappent progressivement de la résine et la capacité de la résine croèt pour atteindre un maximum après deux ou trois cycles. Une partie du composé initial reste dans la résine dite "encagée".

Ces résines encagées sont à la fois meilleures sur la plan des performances de fixation, sur le plan des performances à l'élution et sur le plan de la durée de vie.

Un autre but de la présente invention est de fournir un procédé d'utilisation de ces résines. Ce procédé est caractérisé par le fait qu'il comporte les étapes suivantes :

a) mise en contact de la solution d'aluminate de sodium avec ladite phase stationnaire chargée en alcoyl-7-hydroxy-8-quinoléine ;

b) élution au moyen d'un acide minéral fort à des concen trations supérieures à 0,5 N.

De préférence, ce procédé est caractérisé par le fait que l'étape a) est réalisée par passage sur une colonne remplie de ladite phase stationnaire. La durée de passage est à raison d'un volume de lit de résine par heure.

Avantageusement la vitesse d'écoulement de la solution d'aluminate à travers le lit de résine est comprise entre 2 et 10 volumes de lit de résine par heure.

Afin de charger au maximum la résine en gallium, il est préférable de faire circuler la solution BAYER gallifère jusqu'au moment où la valeur en gallium sortante est au moins égale à 70 %, avantageusement à 90 %, de la valeur entrante. Lorsque il y a plusieurs colonnes de résine, par exemple organisées en carrousel, cette condition s'applique sur la dernière colonne de résine.

Un des avantages de l'utilisation d'une résine est que l'on peut sans grande difficulté les utiliser à des températures relativement élevées, c'est-à-dire dans la gamme de la température ambiante jusqu'à 70°C. On peut ainsi utiliser sans difficulté la température de la liqueur BAYER après précipitation de l'alumine, qui est de l'ordre de 50°C. Cela a même l'avantage d'améliorer sensiblement la cinétique.

On peut utiliser pour l'élution les techniques utilisées lors de l'extraction liquide/liquide du gallium par des acides minéraux forts qui sont choisis dans le groupe constitué par les acides sulfurique, nitrique, halohydriques et leurs mélanges. Lorsque l'on utilise des acides halohydriques, pour éviter qu'il ne se forme du trialogénure de gallium qui resterait dans la résine, il est préférable que la teneur en ces derniers éléments ne soit pas trop élevée. On peut ainsi utiliser des concentrations comprises entre 0,2 et 0,5 N.

Lorsque l'acide minéral fort est choisi dans le groupe constitué par les acides sulfurique, nitrique et leurs mélanges, il n'y a pas de limitation pour la concentration, sinon de limitations économiques, l'homme de mé tier devant choisir entre une acidité forte permettant des concentrations élevées en gallium pouvant atteindre 5 grammes par litre (lorsque l'acidité est supérieure à 5 N) et des acidités faibles qu'il est plus aisé de neutraliser.

Un compromis élégant pourrait être possible en utilisant les techniques décrites dans la demande de brevet déposée en France sous le numéro 86-07.525, techniques où l'on fixe le gallium en milieu acide, même en milieu acide sulfurique concentré, et où l'on élue le gallium une nouvelle fois purifié par des solutions sodiques permettant une bonne électrolyse du gallium.

Il va de soi qu'entre les étapes d'élution et de fixation, et inversement, il est préférable de soumettre la résine à un rinçage.

Un des enseignements les plus intéressants de la présente invention réside dans le fait que les résines selon l'invention ne se dégradent que peu ou pas et qu'elles peuvent subir de 50 à 100 cycles pour les imprégnées et plus de 100 cycles pour les encagées en perdant moins de 20 % de leur capacité initiale.

Le procédé selon la présente invention convient particulièrement bien pour les solutions BAYER dont la composition en éléments principaux se situe dans le domaine défini ci-après (les zéros ne constituant pas de chiffre significatif) :

NaOH (libre) : entre 80 et 100 g/l
$Al_2O_3$ soluble (sous forme $AlO_2-$) : entre 60 et 110 g/l
Ga : entre 100 et 600 ppm
C total inférieur à 50 g/l.

Les exemples qui suivent et qui ne présentent aucun caractère limitatif ont pour but de mettre les spécialistes à même de déterminer aisément les conditions opératoires qu'il convient d'utiliser dans chaque cas particulier.

L'ensemble des exemples ci-dessous a été réalisé avec une solution synthétique dont la composition suit :

$Al_2O_3$ = 102 g/l (54 g/l Al)
Ga = 0,25 g/l
$Fe_2O_3$ = 2 mg/l
$SiO_2$ = 0,57 g/l
$TiO_2$ = traces

Na₂O caustique = 152 g/l

$Na_2O$ caustique $= 152$ g/l
$Na_2O$ carbonaté $= 36,3$ g/l
$P_2O_5$ $= 180$ mg/l
$V_2O_5$ $= 0,31$ g/l
$SO_3$ $= 0,9$ g/l
Carbone total $= 28,7$ g/l
Carbone organique $= 18,2$ g/l
$Cl^-$ $= 6,0$ g/l
Carbone oxalique $= 0,18$ g/l
As $= 40$ mg/l
   d $= 1,325$

EXEMPLE 1 : Recherche d'un taux optimal d'imprégnation

a) Conditions opératoires

Les imprégnations ont été effectuées dans des conditions usuelles en utilisant l'éthanol absolu pour réaliser la dissolution de l'hydroxy-8-quinoléine substituée, vendu sous la dénomination commerciale de LIX 26. Cet éthanol est ensuite évaporé en présence de la résine support.

La résine ainsi obtenue est mise en colonne, puis soumise à une percolation par une solution d'aluminate de sodium et ce jusqu'au moment où la teneur en gallium sortante est égale à la teneur en gallium entrante.

Vitesse de percolation de 4 bV/h - température de travail 50°C.

b) Résultats obtenus

| Taux d'imprégnation de la résine XAD 7 exprimé en g/l de résine sèche | Charge de la résine (en gallium) exprimée en g/l de résine imprégnée après fixation et expansion |
|:---:|:---:|
| 150 | 0,67 |
| 225 | 1,02 |
| 300 | 2,24 |
| 450 | 1,76 |
| 600 | 1,45 |

Une autre série d'essais réalisés dans des conditions similaires avec les mêmes solutions a conduit aux résultats suivants :

| Taux d'imprégnation de la résine XAD 7 exprimé en g/l de résine sèche | Charge de la résine en gallium exprimée en g/l de résine imprégnée après fixation et (expansion) |
|---|---|
| 275 | 1,77 (37 %) |
| 300 | 2,24 (35 %) |
| 330 | 2,45 (37 %) |
| 370 | 1,62 (44 %) |

c) Conclusions

En exprimant la capacité en gallium par gramme de molécule active, on obtient le tableau suivant :

| Taux d'imprégnation de la résine XAD 7 exprimé en g/l de résine sèche | Charge de la résine (en gallium) exprimée en g/g de molécule active |
|---|---|
| 150 | $6,6 \ 10^{-3}$ |
| 225 | $6,1 \ 10^{-3}$ |
| 275 | $8,8 \ 10^{-3}$ |
| 300 | $10,1 \ 10^{-3}$ |
| 330 | $8,0 \ 10^{-3}$ |
| 370 | $6,3 \ 10^{-3}$ |
| 450 | $5,2 \ 10^{-3}$ |
| 600 | $3,3 \ 10^{-3}$ |

Il apparaît nettement, au vu du tableau ci-dessus, que la charge de la résine passe par le maximum, aux alentours de 300 g/l. Des études ultérieures plus fines ont permis de fixer les intervalles préférés spécifiés dans la description.

L'essai de cyclage a été réalisé sur la résine imprégnée à 300 g/l.

EXEMPLE 2 : Cyclage de la résine imprégnée

a) Conditions opératoires

Les solutions d'aluminate ont été passées sur charbon actif avant la fixation. La composition de la solution d'aluminate est la même que celle indiquée ci-dessous.
- Fixation : T = 50°C - Vitesse de percolation 2 bV/h - Volume percolé = 29 bV
- Lavage $H_2O$ : T = ambiante - Vitesse de percolation 10 bV/h - Volume percolé = 5 bV
- Elution $H_2SO_4$ 3 N : T = ambiante - Vitesse de percolation 2 bV/h - Volume percolé = 4 bV
- Lavage $H_2O$ : T = ambiante - Vitesse de percolation 10 bV/h - Volume percolé = 5 bV

b) Résultats obtenus

22 cycles ont été réalisés sur la résine selon les conditions décrites précédemment.
Les résultats figurent dans le tableau ci-dessous.

c) Conclusions

Après une perte de capacité de la résine au cours des 10 premiers cycles, sa capacité se stabilise à 2,25 g/l au cours des cycles suivants.

Un recyclage partiel des éluats permet d'obtenir des éluats contenant plus de 1 g/l de gallium.

Du tableau ci-après il ressort nettement que les valeurs du premier cycle telles qu'elles apparaissent dans l'exemple 1 sont supérieures aux valeurs obtenues après plusieus cycles. La croissance est d'environ 20 %.

CYCLAGE SUR RESINE IMPREGNEE LIX 26 (300 g/l)
Solutions réelles d'aluminate de soude après passage sur charbon actif

| CYCLE | Ga FIXE | Ga ELUE | REMARQUES |
|---|---|---|---|
| 3 | 2,38 g/l | 2,00 g/l | |
| 4* | 2,86 g/l | 2,28 g/l | Cycles 1 à 5 |
| 5 | 2,44 g/l | 2,44 g/l | Elution $H_2SO_4$ 3N |
| 6 | 2,53 g/l | 1,85 g/l | Elution HCl 2N |
| 7 | 2,11 g/l | 2,09 g/l | " " " |
| 8 | 2,34 g/l | 2,49 g/l | " " " |
| 9 | 2,66 g/l | 2,48 g/l | Elution $H_2SO_4$ 3N |
| 10 | 2,46 g/l | 2,24 g/l | " " " |
| 14 | 2,44 g/l | 2,12 g/l | " " " |
| 21 | 2,64 g/l | 2,26 g/l | " " " |

EXEMPLE 3 : Fixation du gallium sur des résines contenant du KELEX encagé

Deux échantillons de résine contenant par litre 250 g de l'hydroxy-8-quinoléine vendu sous la dénomination commerciale KELEX 100 et respectivement 200 g/l d'acide versatique et 200 g/l d'acide stéarique.

Au cours de cette fixation, différents problèmes sont apparus en raison du relargage de l'acide versatique (présence de gouttelettes dans le raffinat).

Dans le cas de l'acide stéarique, ce dernier provoquait l'agglomération des grains de résine contraignat à l'abondon de l'expérimentation avec une charge dans les deux cas de 0,84 g/l sans que la charge maximum eût été atteinte.

L'essai a été repris en réalisant des passages alternés de solutions de soude 5 N pure et d'acide sulfurique 3 N. Après trois de ces cycles l'échantillon est réutilisé pour la fixation du gallium dans les conditions définies précédemment à l'exemple 2.

On obtient pour le premier cycle une fixation de gallium de 2,3 g/l et une élution supérieure à 99 %. Au deuxième cycle la quantité de gallium fixée augmente et atteint 2,6 g/l.

Conclusion

Cette technique d'encageage est particulièrement intéressante car elle permet d'obtenir une même quantité de gallium que celle obtenue avec une résine imprégnée de LIX 26, alors que ce dernier réactif est en utilisation sur résine imprégnée sensiblement plus efficace que le KELEX 100. En outre l'élution est plus aisée.

EXEMPLE 4 : Résines encagées BAYER

20 ml de résine BAYER, mentionné ci-dessus (KELEX + Versatic 10), ont été soumis à 10 cycles de fixation-élution dans les conditions suivantes :
- fixation : 2 bV/h - T = 55°C - solution réelle d'aluminate de soude contenant environ 3,6 $10^{-3}$ mole de gallium par litre de solution.
- élution : $H_2SO_4$ 3N : 2 bV/h - T = 55°C
Les deux étapes de fixation et d'élution sont séparées par un lavage à l'eau.

Les résultats obtenus sont les suivants :

|  | fixation | élution |
|---|---|---|
| cycle 1 | 2,58 g/l | 2,57 g/l |
| 35 cycle 5 | 2,28 g/l | 2,30 g/l |
| cycle 10 | 2,37 g/l | 2,21 g/l |

L'élution totale de la résine ne nécessite que 2 bV, le premier bV contenant 90 % du gallium présent sur la résine. La teneur en aluminium du premier bV est de l'ordre de 1 g/l.

EXEMPLE 5 : Rôle de la teneur en gallium de la solution BAYER

Des essais ont été réalisés dans les mêmes conditions que dans l'exemple 1 et sur une solution BAYER dopée en gallium pour atteindre 500 mg/l, ce qui conduit à une charge à l'équilibre de 3,52 g/l et une charge en gallium de $15,5 \cdot 10^{-3}$ g/g de matière active.

On peut en conclure que l'on est dans la zone d'inflexion de l'isotherme de fixation entre la droite de l'origine et le palier. La charge d'équilibre des résines imprégnées selon l'invention dans la zone où l'on désire opérer décroît moins vite avec la diminution de teneur en gallium des solutions d'aluminate.

EXEMPLE 6 : Fixation du gallium sur une résine imprégnée sur support XAD 16

Cet essai a pour but de montrer la généralité de l'enseignement selon l'invention pour des supports ayant une surface spécifique nettement supérieure à celui vendu sous la dénomination XAD 7.

Le support XAD 16 est une résine de type non polaire (polystyrène) avec 60 % en volume de pores dont le diamètre moyen est de 100 Å. La surface spécifique de support est de 825 m$^2$ par gramme de support sec.

Les conditions opératoires sont identiques à celle de l'exemple 1. La densité sèche apparente est de l'ordre de 0,25-0,30.

Les résultats obtenus sont rassemblés dans les tableaux suivants.

| Taux d'imprégnation de la résine XAD 16 exprimé en g/l de résine sèche | Charge de la résine (en gallium) exprimée en g/l de résine imprégnée après fixation et (expansion) |
|---|---|
| 200 | |
| 330 | 1,76 (33 %) |
| 400 | 1,32 (47 %) |
| 450 | 1,04 (50 %)* |
| 500 | 0,49 (60 %)* |

* Pour ces deux valeurs, on a constaté respectivement un collage et une prise en masse.

| Taux d'imprégnation de la résine XAD 16 exprimé en g/l de résine sèche | Charge de la résine (en gallium) exprimée en g/g de molécule active |
|---|---|
| 200 | $10^{-3}$ |
| 330 | $5,29.10^{-3}$ |
| 400 | $3,70.10^{-3}$ |
| 450 | $2,77.10^{-3}$ |
| 500 | $1,24.10^{-3}$ |

Ces essais montrent clairment combien il est important de ne pas remplir complètement les pores. En effet, le collage et la prise en masse, qu'ils soient après l'imprégnation ou après la mise en eau, sont une preuve que les pores sont remplis. Cette preuve s'impose même face au calcul théorique. Ainsi, ces faits permettent de déterminer grossièrement que les pores de la résine sont pleins à partir de 450 g/l.

Par comparaison, les calculs faits selon la formule :

$v = x (l + y - z)$

où :

v = volume des pores après expansion (cf. description)

x = volume apparent de la résine diminuée du volume intersticiel, en général, 66 % du volume sel apparent

y = taux de gonflement

z = volume occupé par le polymère dans les grains de résine ; cette valeur peut être obtenu en prenant le complément à 1 du volume des pores.

Ainsi, pour la résine XAD 16 et pour un taux d'expansion de 50 %, le volume total de matière active ne devra pas dépasser :

0,66 x (1,5 - 0,4) = 0,73 1/1 de résine sèche (volumeapparent).

Considérant que la densité de la matière active est voisine de 1, la quantité par litre de résin sèche ne devra pas dépasser 730 g/l.

Dans ce cas, le collage et la prise en masse montrent que le gonflement ne donne pas de l'espace qu'aux pores.

Cependant le calcul ci-dessus donne des résultats significatifs pour d'autres résines, telle que la résine XAD 7.

Malgré les problèmes de réplétion des pores dans la résine XAD 16, l'effet de pic a été clairement démontré

; la valeur 250-350 grammes de matière active par litre de résine sèche trouvée pour la résine XAD 7 a donc une valeur empirique générale notamment pour les résines de surface spécifique voisines ou supérieures de la résine XAD 7.

## Revendications

1. Procédé de récupération du gallium contenu dans une solution d'aluminate de sodium par échange d'espèces chimiques entre une phase stationnaire chargée en alcoyl-7-hydroxy-8-quinoléine et la phase aqueuse d'aluminate de sodium, caractérisé par le fait que la teneur en alcoyl-7-hydroxy-8-quinoléine est supérieure à 100 grammes par litre de support.

2. Procédé selon la revendication 1, caractérisé par le fait que la quantité d'alcoyl-7-hydroxy-8-quinoléine est comprise entre $5 \cdot 10^{-6}$ mole/m$^2$ et $9 \cdot 10^{-6}$ mole/m$^2$ de surface spécifique du support.

3. Procédé selon les revendications 1 et 2 prises séparément, caractérisé par le fait que la quantité d'alcoyl-7-hydroxy-8-quinoléine est comprise entre 250 et 350 grammes par litre de support.

4. Procédé selon les revendications 1 à 3 prises séparément, caractérisé par le fait que le support est la résine XAD 7.

5. Procédé selon les revendications 1 à 4 prises séparément, caractérisé par le fait que ladite alcoyl-7-hydroxy-8-quinoléine est un produit vendu sous la marque déposée LIX 26.

6. Procédé selon les revendications 1 à 4 prises séparément, caractérisé par le fait que ladite phase stationnaire est une résine encageant l'alcoyl-7-hydroxy-8-quinoléine.

7. Procédé selon les revendications 1 à 6 prises séparément, caractérisé par le fait qu'il comporte les étapes suivantes :

a) mise en contact de la solution d'aluminate de sodium avec ladite phase stationnaire chargée en alcoyl-7-hydroxy-8-quinoléine ;

b) élution au moyen d'un acide minéral fort à des concentrations supérieures à 0,5 N.

8. Procédé selon la revendication 7, caractérisé par le fait que dans l'étape a) le débit de la phase aqueuse aluminate de sodium est d'au moins un volume de lit de résine par heure.

9. Procédé selon la revendication 8, caractérisé par le fait que la vitesse d'écoulement de la solution d'aluminate à travers le lit de résine est comprise entre 2 et 10 volumes de lit de résine par heure.

10. Procédé selon les revendications 8 et 9 prises séparément, caractérisé par le fait que l'on fait circuler ladite solution d'aluminate de sodium sur le lit de résine jusqu'au moment où la teneur en gallium de la solution sortante est égale à au moins 70 % de la valeur entrante.

11. Procédé selon les revendications 8 à 10 prises séparément, caractérisé par le fait que ladite solution d'aluminate de sodium est une solution à 50°C.

12. Procédé selon les revendications 1 à 11 prises séparément, caractérisé par le fait que la composition de la solution d'aluminate de sodium est celle des solutions BAYER après précipitation de l'alumine.

13. Procédé selon les revendications 7 à 12 prises séparément, caractérisé par le fait que les acides minéraux forts sont choisis dans le groupe constitué par l'acide sulfurique, l'acide nitrique, les acides halohydriques et leurs mélanges.

14. Procédé selon la revendication 13, caractérisé par le fait que lesdits acides minéraux forts sont choisis dans le groupe des acides halohydriques et leurs mélanges et par le fait que leur concentration est comprise entre 0,5 N et 0,2 N.

15. Procédé selon la revendication 13, caractérisé par le fait que ledit acide minéral fort est choisi dans le groupe constitué par l'acide sulfurique et l'acide nitrique et par le fait que leur concentration est comprise entre 1 N et 10 N.

16. Procédé selon la revendication 15, caractérisé par le fait que ladite concentration est comprise entre 5 et 10 N.

17. Procédé selon les revendications 7 à 16 prises séparément, caractérisé par le fait qu'une étape de lavage est prévue entre les étapes a) et b), puis après l'étape b).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CHEMICAL ABSTRACTS, vol. 103, no. 2, juillet 1985, page 129, résumé no. 8522n, Columbus, Ohio, US; & JP-A-60 42 234 (MITSUBISHI CHEMICAL INDUSTRIES CO., LTD) 06-03-1985 * En entier * | 1-17 | C 22 B   58/00 C 01 G   15/00 |
| | --- | | |
| X | CHEMICAL ABSTRACTS, vol. 104, 1986, page 567, résumé no. 14014k, Columbus, Ohio, US; L. BOKOBZA et al.: "Spectroscopic investigation of adsorbed 7-(4-ethyl-1-methyloctyl)-8-quino linol (Kelex 100) and of its gallium(III) complex: comparison with the behaviors observed in solvent extraction systems", & POLYHEDRON 1985, 4(8), 1499-505 * En entier * | 1-17 | |
| | --- | | DOMAINES TECHNIQUES RECHERCHES (Int. Cl.4) |
| A | CHEMICAL ABSTRACTS, vol. 105, 1986, page 449, résumé no. 85696r, Columbus, Ohio, US; H. KOSHIMA: "Adsorption of iron(III), gold(III), gallium(III), thallium(III) and antimony(V) on Amberlite XAD and Chelex 100 resins from hydrochloric acid solution", & ANAL SCI. 1986, 2(3), 255-60 | | C 22 B C 01 G |
| | ---                                        -/- | | |

Le présent rapport de recherche a été établi pour toutes les revendications

| Lieu de la recherche | Date d'achèvement de la recherche | Examinateur |
|---|---|---|
| LA HAYE | 20-10-1987 | JACOBS J.J.E.G. |

| | **DOCUMENTS CONSIDERES COMME PERTINENTS** | | Page   2 |
|---|---|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | CHEMICAL ABSTRACTS, vol. 101, no. 10, septembre 1984, page 146, résumé no. 75271b, Columbus, Ohio, US; & JP-A-59 54 626 (SUMITOMO CHEMICAL CO., LTD) 29-03-1984 --- | | |
| A | CHEMICAL ABSTRACTS, vol. 105, 1986, page 365, résumé no. 214645z, Columbus, Ohio, US; D. BAUER et al.: "Interfacial properties of 5-alkyl 8-quinolinols and rate of phase transfer in aluminum/gallium separation", & CHEM. SEP., DEV. SEL. PAP. INT. CONF. SEP. SCI. TECHNOL., 1st 1986, 1, 303-11 --- | | |
| A | CHEMICAL ABSTRACTS, vol. 104, 1986, page 262, résumé no. 153171x, Columbus, Ohio, US; T.M. SUZUKI et al.: "The separation and concentration of gallium(III) and/or indium(III) using polystyrene resins functionalized with complexane-type ligands", & BULL. CHEM. SOC. JPN. 1986, 59(3), 865-8 ---          -/- | | DOMAINES TECHNIQUES RECHERCHES (Int. Cl.4) |

Le présent rapport de recherche a été établi pour toutes les revendications

| Lieu de la recherche LA HAYE | Date d'achèvement de la recherche 20-10-1987 | Examinateur JACOBS J.J.E.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

Numéro de la demande

EP 87 40 1925

## DOCUMENTS CONSIDERES COMME PERTINENTS

Page 3

| Catégorie | Citation du document avec indication, en cas de besoin, des parties pertinentes | Revendication concernée | CLASSEMENT DE LA DEMANDE (Int. Cl.4) |
|---|---|---|---|
| A | CHEMICAL ABSTRACTS, vol. 99, 1983, page 209, résumé no. 25952u, Columbus, Ohio, US; & JP-A-58 58 186 (AGENCY OF INDUSTRIAL SCIENCES AND TECHNOLOGY) 06-04-1983 | | |
| A | US-A-4 468 374 (Y. KATAOKA) | | |
| A,D | AU-B- 448 131 (ASHLAND OIL INC.) | | |
| A,D | EP-A-0 102 280 (RHONE-POULENC SPECIALITES) | | |
| A,D | EP-A-0 102 882 (RHONE-POULENC SPECIALITES) | | DOMAINES TECHNIQUES RECHERCHES (Int. Cl.4) |
| A | EP-A-0 167 414 (SOCIETE MINIERE ET METALLURGIQUE DE PENARROYA) * Revendications; exemple 2 * | 1-17 | |

Le présent rapport de recherche a été établi pour toutes les revendications

| Lieu de la recherche | Date d'achèvement de la recherche | Examinateur |
|---|---|---|
| LA HAYE | 20-10-1987 | JACOBS J.J.E.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82